# EUROPEAN PATENT SPECIFICATION

(11) **EP 4 170 833 B1**
(45) Date of publication and mention of the grant of the patent: **10.12.2025**
(21) Application number: 22202327.7
(22) Date of filing: 18.10.2022
(51) Int. Cl.: H01R 13/6591, H01R 13/6593

(54) **SHIELD TERMINATION SYSTEM THAT ELIMINATES CABLE SHIELD DRAIN-WIRES**
ABSCHIRMUNGSABSCHLUSSSYSTEM ZUR BESEITIGUNG VON KABELABSCHIRMUNGSABFLUSSDRÄHTEN
SYSTÈME DE TERMINAISON DE BLINDAGE ÉLIMINANT LES FILS DE DRAIN DE BLINDAGE DE CÂBLE

(30) Priority: 20.10.2021 US 202117506008
(43) Date of publication of application: 26.04.2023
(73) Proprietor: Hamilton Sundstrand Corporation, Charlotte, NC 28217-4578 (US)
(72) Inventor: HOECKELE, Robert C., Granby, CT 06035 (US); SOLANKI, Jitendra J., Belvidere, 61008 (US); MANNA, David J., Middletown, 06457 (US)
(74) Representative: Dehns

(56) References cited:
- US-A- 5 246 376
- US-A1- 2021 159 679
- US-B1- 7 255 602

## Description

### BACKGROUND

Exemplary embodiments of the present disclosure pertain to the art of electrical connections and, in particular, to terminating cable shields.

In aircrafts, multiple wiring harnesses are included to connect different components that can provide power and/or signal transfer capabilities for controlling and/or transferring data between the components. Such harnesses can include multiple wires or wire groups (e.g., twisted pairs). Each of the wires or groups can include a shield to keep Electromagnetic Interference (EMI) between wires or from external RF environment low. Such a shield is typically in the form of a screen and each shield is typically terminated (e.g., connected to ground) by a drain wire that is commonly referred to as a pig tail.

Current cable and harness manufacturing techniques can be large contributors to Electromagnetic Interference (EMI) outages. Specifically, termination methods that use drain-wires (pig tails). US 2021/0159679 A1 describes a cable retainer insert and connector for shielding transfer.

### BRIEF DESCRIPTION

Disclosed and defined in claim 1 is a wiring unit.

In addition to one or more of the features described above, or as an alternative to any of the foregoing embodiments, the ferrule can include a hollow core and has one or more additional wires disposed within the hollow core.

In addition to one or more of the features described above, or as an alternative to any of the foregoing embodiments, the ferrule can be integrally formed as part of the connector backshell.

In addition to one or more of the features described above, or as an alternative to any of the foregoing embodiments, the sock can integrally formed with the connector backshell.

In addition to one or more of the features described above, or as an alternative to any of the foregoing embodiments, the one or more wiring cables includes first portion and a second portion, the first portion is arranged on the outer surface of the ferrule and is surrounded by a conductive retainer and the second portion surround the first portion and the conductive retainer and is electrically connected to the shield sock. The second portion can contacts the shield sock.

In addition to one or more of the features described above, or as an alternative to any of the foregoing embodiments, the unit or connector can includes a clamp surrounding the shield sock and the second portion.

In addition to one or more of the features described above, or as an alternative to any of the foregoing embodiments, the system can include a first clamp surrounding the shield sock and the one or more wiring cables and a second clamp surrounding the back shell and the one or more wiring cables that connects the one or more wiring cables to the backshell.

In addition to one or more of the features described above, or as an alternative to any of the foregoing embodiments, the ferrule can include a first diameter and a second diameter.

In addition to one or more of the features described above, or as an alternative to any of the foregoing embodiments, the one or more wiring cables include a first portion having first size and a second portion having a second size and the first portion is arranged of over the first diameter and second portion is arrange over the second diameter.

In addition to one or more of the features described above, or as an alternative to any of the foregoing embodiments, the shield sock can be formed of braided material.

In addition to one or more of the features described above, or as an alternative to any of the foregoing embodiments, the shield sock is banded to the backshell with a band that surround the backshell and the one or more wiring cables.

### BRIEF DESCRIPTION OF THE DRAWINGS

The following descriptions should not be considered limiting in any way. With reference to the accompanying drawings, like elements are numbered alike:
FIG. 1 is side view of wiring connector assembly having a portion of a backshell removed to show certain connections disclosed herein;
FIG. 2 is a cross-section of an example of a wiring cable;
FIG. 3 is a cross-section of FIG. 1 taken along line 3-3;
FIG. 4 shows an alternative embodiment to that of FIG. 3 with additional wires inside the ferrule;
FIG. 5 is side view of wiring connector assembly having a portion of a backshell removed to show certain connections disclosed herein and illustrating a band coupling wiring cable screens to the backshell;
FIG. 6 is a cross-section showing an alternative to FIG. 3 where the wiring cables are divided into two portions;
FIG. 7 is a cross-section showing an alternative to FIG. 3 where the wiring cables from two portions of different sizes and surround a ferrule with partition to accommodate different outer diameters;
FIG. 8 shows an embodiment with a backshell that includes an integrally formed ferrule; and
FIG. 9 shows another embodiment that does not form part of the invention, and does not include a sock but can include all other elements as described herein.

### DETAILED DESCRIPTION

A detailed description of one or more embodiments of the disclosed apparatus and method are presented herein by way of exemplification and not limitation with reference to the Figures.

As discussed above, the shields of wires in an aircraft (or other vehicle) can be connected to a common or ground point via a drain wire. However, it has been discovered that such drain wires have higher impedance than the shield, and they can introduce larger "loop area" than a direct shield termination. As such, the drain wires can reduce the effectiveness of cable shielding for the protection against radio-frequency (RF) susceptibility threats or lead to higher EMI emissions.

Herein disclosed are systems and methods where electrical connections of individual cable shields is achieved within the harness design without the use of any shield drain-wires separately attached to the shields. Connections can be made near where cables enter the backshell making for improved shield terminations and reduced assembly steps. Such shield termination eliminates the use of drain wires producing lower impedance and smaller "loop area" termination for shields.

One or more embodiments may minimize the extent of the exposed or unshielded signals at the connector entry to reduce susceptibility due to cross coupling between signals and from shield drain wires in the unshielded area. As will be understood, the systems and methods can improve reliability for robust and longer-term field performance and may improve manufacturability of the harness when compared to termination methods that use shield drain-wires.

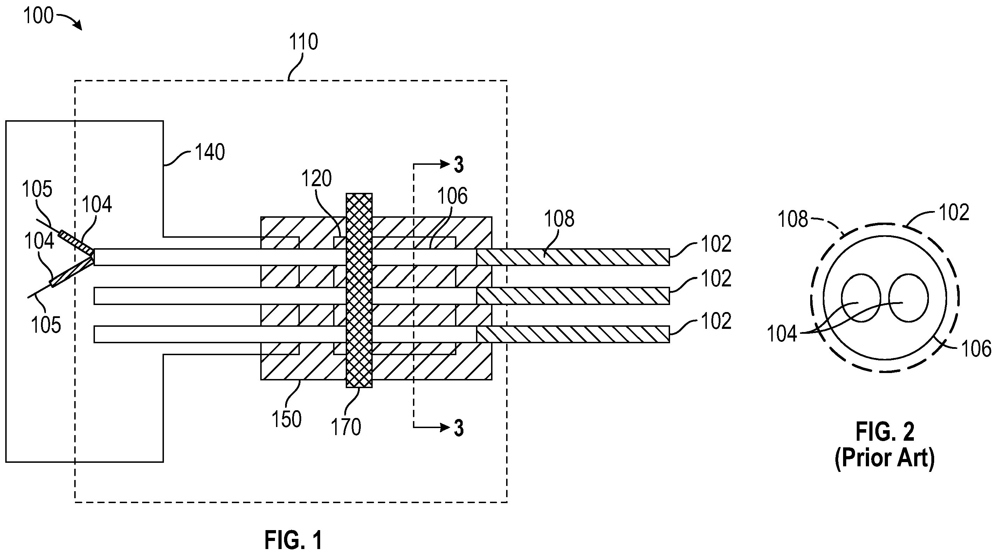

FIG. 1 shows an example of one end of cable harness 100. This end can be referred as a termination portion of the harness 100 and can be referred to as a "connector assembly" or "wiring unit" herein from time to time. In one embodiment, all ends of the harness can include the connector assembly or wiring unit disclosed herein but that is not required.

The cable harness 100 includes one or more wiring cables 102. Each of one or more wiring cable can include at least one conductor and a shield as best seen in FIG. 2. InFIG. 2, the wiring cable 102 includes 2 conductors (e.g., wires) surrounded by a shield 106. Of course, the cable could include more or less than 2 conductors in some embodiments. In one embodiment, the cable includes a twisted pair of conductors 104. For consistency, in FIGs. 1, 5 and 9, one of the cable is shown as being a twisted pair with wires 104 extending from it. The skilled artisan will realize any type of cable can be used and all of the figures can be assumed to show the different possible wire configurations of each cable 102 in all of the figures.

The shield 106 can be formed of a solid or braided conductive material. The shield is surrounded by an insulator 108. As discussed more fully below, embodiments herein include methods that remove some the insulator 108 so that the shield is exposed. In other embodiments, the cable 102 can be formed such that it does not have an insulator 108 around it. Thus, the insulator 108 is shown as being optional in FIG. 2.

Referring now to both FIGs. 1 and 2, in a region 110 near the end of the cable harness 100 the ends of the conductors 104 can have the insulator 108 removed to expose the shield 106 of each cable 102. In FIG. 1 the insulator 108 is shown as being textured whereas the shield 106 is shown as being untextured in an effort to more clearly illustrate the difference.

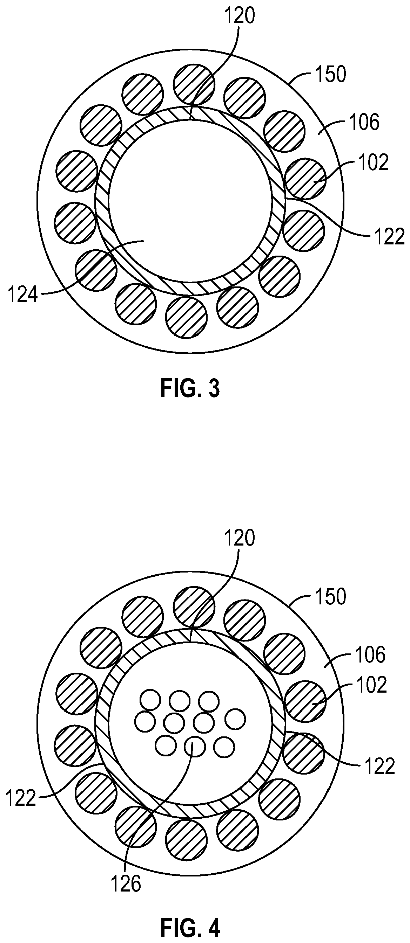

With reference now to FIG. 3, a cross section taken along line 3-3 is shown. In FIG. 3, the ferrule 120 is shown as a hollow ring having a generally circular shape.

The illustrated ferrule 120 is shown as being a cylinder having a hollow core (inner region 124). This hollow region 124 could be filled with unshielded wires 126 in one embodiment and as shown in FIG. 4.

The skilled artisan will realize that as now described, the shields are exposed on an outer surface and electrically connected to the other cables either due to their contact with one another or via the ferrule 120 (or both). Embodiments herein also include a connector backshell 140. A backshell is a well know element used in cable harnesses and a cut-away view of an example backshell 140 is shown in FIG. 1. The backshell generally provides a physical element to terminate a harness such as harness 100 so that it can be connected to another element. In one embodiment, the backshell 140 is electrically conductive and may be grounded to another element when connected to it.

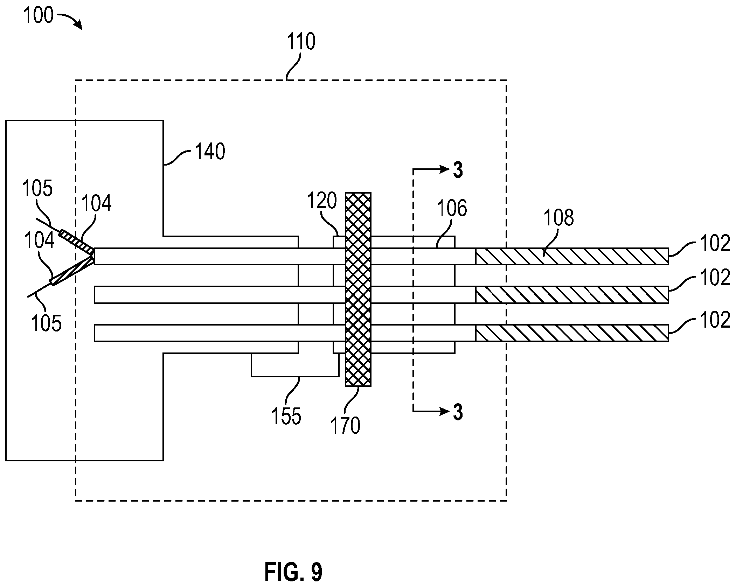

The illustrated harness 100 also includes a conductive sock 150 connected to the backshell 140. The conductive sock 150 can be formed as a flexible conductor that can be expanded or otherwise positioned around the ferrule 120 and the exposed portions of the shields 106 so that it makes electrical contact with the shields. In this manner, all of the shields 106 can be eclectically connected to the backshell 140 without the need for pigtails. It shall be understood, however, that in the case where ferrule is conductive, the sock may be omitted and the ferrule electrically connected to the backshell. An example of such is shown in FIG. 9 where a connector 155 such as a grounding wire electrically connects the backshell 140 to the ferrule 120 which, in this embodiment, is formed of or covered by a conductive material.

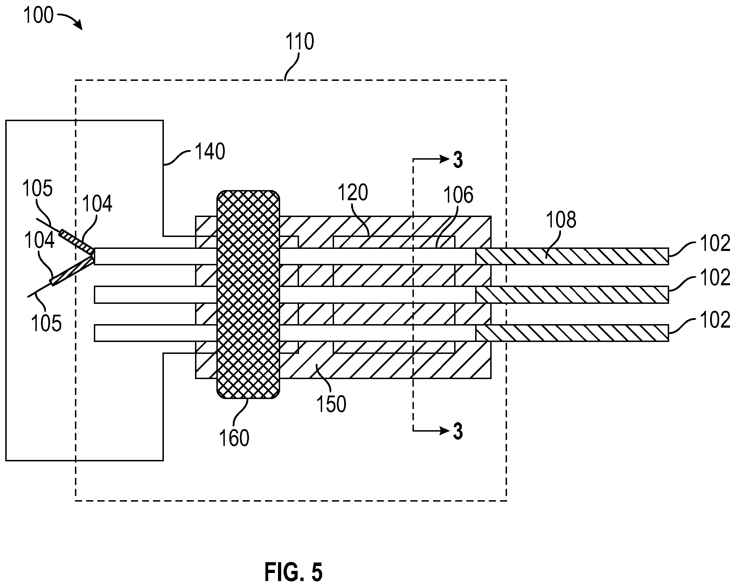

The conductive sock 150 can be permanently connected to the backshell 140 in one embodiment. For example, it can be soldered, welded or otherwise permanently attached. Alternatively, and as shown in FIG. 5, the sock 150 can be removably coupled to the backshell 140 with, for example, a band 160 or other type of removable fastener.

Similarly, the sock 150 can be permanently or removably connected to the exposed portions of the cable shields in area immediately over ferrule 120. An example of such a connection is shown in FIG. 1 and is held by a band 170 or other type fastener. An example of "other fastener" could include a heat shrink ring.

It shall be understood that portions of the embodiments of FIGs. 1 and 5 can be interchanged. For example, in FIG. 5, the band 160 can be provided and the shields either permanently coupled to the sock 150 (by welding, soldering, etc.) or removably coupled with a band such as band 170 of FIG. 1. Alternatively, the band 170 could be provided as shown in FIG. 1 and another band (such as band 160) or other fastener used to connect the sock to the backshell 140.

In the above examples, the cables 102 have been distributed evenly about the ferrule 120. While such may be beneficial, it is not required.

From the above, it shall be understood that a method of forming a wiring unit/connector assembly has also been disclosed. The method includes stripping or otherwise removing the insulator 108 from one or more individual cable 102 to expose shields 106 on each wire 104 that is part of the cable. In this method, removing can include exposing enough of the cable shield 106 to cover from the location of the ferrule 120 up to the back of the backshell 140. The ends of wires 104 forming the cable 102 can be prepared for routing to the connector pins as per the style of the connector and backshell requirements.

In one embodiment, the exposed cable shields 106 in cables 102 are bundled around the ferrule 120 such that the exposed shields are aligned and contact the outer side 122 of the ferrule 120. As discussed above, cables that are unshielded or cables which require shields to be kept isolated (for local termination) (e.g., wires 126 of FIG. 4) can optionally be routed through the inner diameter (core 124 with outer side labeled as 122) of the ferrule 120.

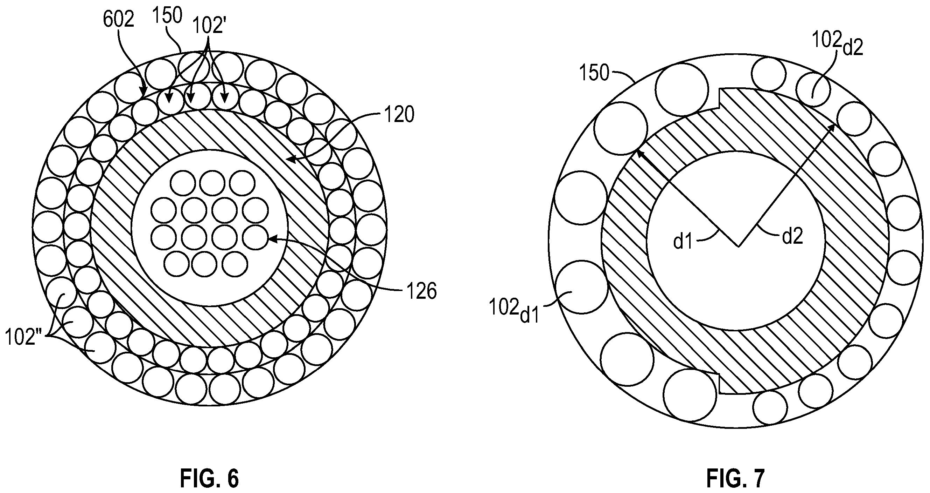

With reference now to FIG. 6, is some cases not all of the wiring cables can fit around the ferrule 120. In such a case, a first portion can be arranged around the ferrule 120 outer circumference. These wiring cables are denoted as 102' in FIG. 6. The first portion 102' can then have a retainer 602 (such as a wire tie) formed around them to hold them in place. The retainer 602 is conductive in one embodiment. Then, a second portion 102" is formed around the first portions 102' and then the sock 150 applied as described in any of the manners described above.

In other embodiments, the ferrule 120 could have different shapes than just circular. For example, as shown in FIG. 7, the ferrule could have a variable thickness so that it has two different outer diameters (d1 and d2). This can allow wiring cables of different sizes (102_{d1} and 102_{d2}) to be grouped together in a manner that all present a relatively uniform outer diameter (dₒᵤₜ) so they can effectively contact the sock 150.

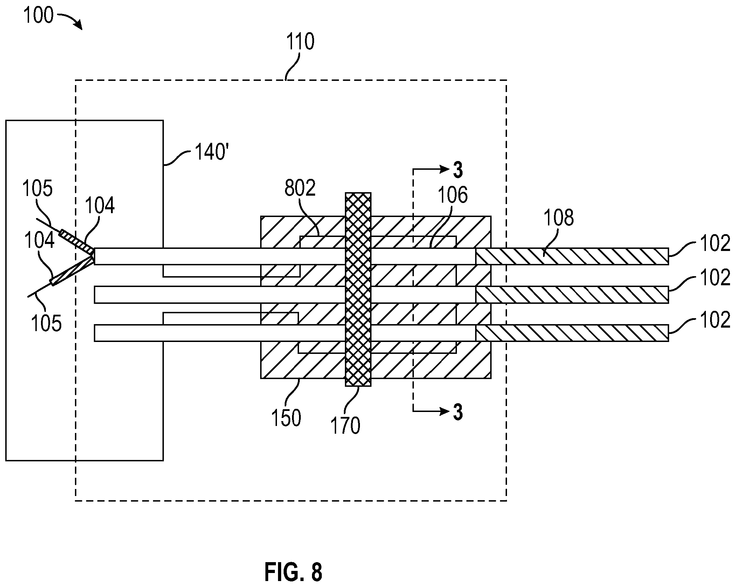

In the above embodiments, the ferrule 120 has been described as separate piece from the backshell 140. However, it could be part of or integrally connected to the backshell 140' as shown in FIG. 8. That is, the rear portion 802 of the backshell 140' could be configured similar to any of the ferrules 120 described above. The embodiment of FIG. 8 can be formed in any of manners described above.

It should be noted that shrink wrap of other binding tools (e.g., heat shrink tubing) can be used at certain locations without departing from the teachings herein. For example, the sock 150 could be surrounded by shrink wrap/heat shrink tubing before any of the bands discussed above are used or could take the place of them in one embodiment.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

It is intended that the present disclosure not be limited to the particular embodiment disclosed as the best mode contemplated for carrying out this present disclosure, but that the present disclosure will include all embodiments falling within the scope of the claims.

## Claims

1. A wiring unit comprising:
one or more wiring cables (102), each wiring cable including one or more wires surrounded by a cable shield;
a connector backshell (140);
a non-conductive ferrule (120) disposed such that the one or more wires are arranged on an outer surface of the ferrule (120);
a conductive shield sock (150) electrically connected to the connector backshell (140),
wherein the shield sock surrounds the ferrule (120) and is in electrical contact with the cable shield of each of the one or more wiring cables (102) such that it electrically connects the cable shields to the connector backshell to provide a ground connection between the cable shield and the connector backshell.

2. The wiring unit of claim 1, wherein the ferrule (120) includes a hollow core and has one or more additional wires disposed within the hollow core.

3. The wiring unit of any preceding claim, wherein the ferrule (120) is integrally formed as part of the connector backshell (140).

4. The wiring unit of any preceding claim, wherein the sock (150) is integrally formed with the connector backshell (140).

5. The wiring unit of any preceding claim, wherein the one or more wiring cables (102) are divided into first portion and a second portion;
wherein the first portion is arranged on the outer surface of the ferrule (120) and is surrounded by a conductive retainer (602); and
wherein the second portion surrounds the first portion and the conductive retainer (602) and is electrically connected to the shield sock.

6. The wiring unit of claim 5, wherein the second portion contacts the shield sock.

7. The wiring unit of claim 6, further comprising a clamp surrounding the shield sock and the second portion.

8. The wiring unit of any preceding claim, further comprising a first clamp surrounding the shield sock and the one or more wiring cables (102).

9. The wiring unit of claim 8further comprising a second clamp surrounding the back shell and the one or more wiring cables (102) that connects the one or more wiring cables (102) to the backshell (140).

10. The wiring unit of any preceding claim, wherein the ferrule (120) includes a first diameter and a second diameter.

11. The wiring unit of the preceding claim, wherein the one or more wiring cables (102) include a first portion having first size and a second portion having a second size and the first portion is arranged of over the first diameter and second portion is arrange over the second diameter.

12. The wiring unit of any preceding claim, wherein the shield sock is formed of braided material.

13. The wiring unit of any preceding claim, wherein the shield sock is integrally formed as part of the backshell (140), or wherein the shield sock is banded to the backshell (140) with a band that surround the backshell (140) and the one or more wiring cables (102).

## Patentansprüche

1. Verdrahtungseinheit, umfassend:
ein oder mehrere Verdrahtungskabel (102), wobei jedes Verdrahtungskabel ein oder mehrere Drähte umfasst, die von einer Kabelabschirmung umgeben sind;
a Steckergehäuse (140);
eine nichtleitende Zwinge (120), die so angeordnet ist, dass der eine oder die mehreren Drähte auf einer Außenfläche der Zwinge (120) angeordnet sind;
eine leitende Abschirmungssocke (150), die elektrisch mit dem Steckergehäuse (140) verbunden ist,
wobei die Abschirmungssocke die Zwinge (120) umgibt und in elektrischem Kontakt mit der Kabelabschirmung jedes der einen oder mehreren Verdrahtungskabel (102) steht, so dass sie die Kabelabschirmungen elektrisch mit dem Steckergehäuse verbindet, um eine Masseverbindung zwischen der Kabelabschirmung und dem Steckergehäuse bereitzustellen.

2. Verdrahtungseinheit nach Anspruch 1, wobei die Zwinge (120) einen hohlen Kern aufweist und einen oder mehrere zusätzliche Drähte enthält, die innerhalb des hohlen Kerns angeordnet sind.

3. Verdrahtungseinheit nach einem der vorhergehenden Ansprüche, wobei die Zwinge (120) integral als Teil des Steckergehäuses (140) ausgebildet ist.

4. Verdrahtungseinheit nach einem der vorhergehenden Ansprüche, wobei die Socke (150) integral mit dem Steckergehäuse (140) ausgebildet ist.

5. Verdrahtungseinheit nach einem der vorhergehenden Ansprüche, wobei das eine oder die mehreren Verdrahtungskabel (102) in einen ersten Abschnitt und einen zweiten Abschnitt unterteilt sind;
wobei der erste Abschnitt auf der Außenfläche der Zwinge (120) angeordnet ist und von einer leitenden Halterung (602) umgeben ist; und
wobei der zweite Abschnitt den ersten Abschnitt und die leitende Halterung (602) umgibt und elektrisch mit der Abschirmungssocke verbunden ist.

6. Verdrahtungseinheit nach Anspruch 5, wobei der zweite Abschnitt mit der Abschirmsocke in Kontakt steht.

7. Verdrahtungseinheit nach Anspruch 6, die ferner eine Klemme umfasst, die die Abschirmsocke und den zweiten Abschnitt umgibt.

8. Verdrahtungseinheit nach einem der vorhergehenden Ansprüche, die ferner eine erste Klemme umfasst, die die Abschirmsocke und das eine oder die mehreren Verdrahtungskabel (102) umgibt.

9. Verdrahtungseinheit nach Anspruch 8, die ferner eine zweite Klemme umfasst, die das Rückgehäuse und das eine oder die mehreren Verdrahtungskabel (102) umgibt und die das eine oder die mehreren Verdrahtungskabel (102) mit dem Rückgehäuse (140) verbindet.

10. Verdrahtungseinheit nach einem der vorhergehenden Ansprüche, wobei die Zwinge (120) einen ersten Durchmesser und einen zweiten Durchmesser aufweist.

11. Verdrahtungseinheit nach dem vorhergehenden Anspruch, wobei das eine oder die mehreren Verdrahtungskabel (102) einen ersten Abschnitt mit einer ersten Größe und einen zweiten Abschnitt mit einer zweiten Größe umfassen und der erste Abschnitt über dem ersten Durchmesser und der zweite Abschnitt über dem zweiten Durchmesser angeordnet ist.

12. Verdrahtungseinheit nach einem der vorhergehenden Ansprüche, wobei die Abschirmsocke aus geflochtenem Material gebildet ist.

13. Verdrahtungseinheit nach einem der vorhergehenden Ansprüche, wobei die Abschirmsocke integral als Teil des Rückgehäuses (140) ausgebildet ist oder wobei die Abschirmsocke mit einem Band an das Rückgehäuse (140) gebunden ist, das das Rückgehäuse (140) und das eine oder die mehreren Verdrahtungskabel (102) umgibt.

## Revendications

1. Unité de câblage comprenant :
un ou plusieurs câbles de câblage (102), chaque câble de câblage comportant un ou plusieurs fils entourés d'un blindage de câble ;
une coque arrière de connecteur (140) ;
une ferrule non conductrice (120) disposée de telle sorte que les un ou plusieurs fils soient agencés sur une surface extérieure de la ferrule (120) ;
une gaine de blindage conductrice (150) électriquement reliée à la coque arrière de connecteur (140),
dans laquelle la gaine de blindage entoure la ferrule (120) et est en contact électrique avec le blindage de câble de chacun des un ou plusieurs câbles de câblage (102), de telle sorte qu'elle relie électriquement les blindages de câble à la coque arrière de connecteur pour assurer une connexion de masse entre le blindage de câble et la coque arrière de connecteur.

2. Unité de câblage selon la revendication 1, dans laquelle la ferrule (120) comporte un noyau creux et présente un ou plusieurs fils supplémentaires disposés à l'intérieur du noyau creux.

3. Unité de câblage selon une revendication précédente, dans laquelle la ferrule (120) est formée comme partie intégrante de la coque arrière de connecteur (140).

4. Unité de câblage selon une revendication précédente, dans laquelle la gaine (150) est formée d'un seul tenant avec la coque arrière de connecteur (140).

5. Unité de câblage selon une revendication précédente, dans laquelle les un ou plusieurs câbles de câblage (102) sont divisés en une première partie et une seconde partie ;
dans laquelle la première partie est agencée sur la surface extérieure de la ferrule (120) et est entourée par un élément de retenue conducteur (602) ; et
dans laquelle la seconde partie entoure la première partie et l'élément de retenue conducteur (602), et est reliée électriquement à la gaine de blindage.

6. Unité de câblage selon la revendication 5, dans laquelle la seconde partie est en contact avec la gaine de blindage.

7. Unité de câblage selon la revendication 6, comprenant également une bride entourant la gaine de blindage et la seconde partie.

8. Unité de câblage selon une quelconque revendication précédente, comprenant également une première bride entourant la gaine de blindage et les un ou plusieurs câbles de câblage (102).

9. Unité de câblage selon la revendication 8, comprenant également une seconde bride entourant la coque arrière et les un ou plusieurs câbles de câblage (102), qui relie les un ou plusieurs câbles de câblage (102) à la coque arrière de connecteur (140).

10. Unité de câblage selon une quelconque revendication précédente, dans laquelle la ferrule (120) comporte un premier diamètre et un second diamètre.

11. Unité de câblage selon une quelconque revendication précédente, dans laquelle les un ou plusieurs câbles de câblage (102) comportent une première partie présentant une première taille et une seconde partie présentant une seconde taille et la première partie est agencée autour d'un premier diamètre et la seconde partie est agencée autour d'un second diamètre.

12. Unité de câblage selon une quelconque revendication précédente, dans laquelle la gaine de blindage est formée d'un matériau tressé.

13. Unité de câblage selon une quelconque revendication précédente, dans laquelle la gaine de blindage est formée comme partie intégrante de la coque arrière (140), ou dans laquelle la gaine de blindage est liée à la coque arrière (140) au moyen d'une bande entourant la coque arrière (140) et les un ou plusieurs câbles de câblage (102).
